# EUROPÄISCHE PATENTANMELDUNG

(11) **EP 0 825 041 A2**
(43) Veröffentlichungstag der Anmeldung: **25.02.1998**
(21) Anmeldenummer: 97113277.4
(22) Anmeldetag: 01.08.1997
(51) Int. Cl.: B60G 17/027

(54) **Vorrichtung zur höhenveränderlichen Abstützung einer Rad- oder Achsfederung am Aufbau eines Kraftfahrzeugs**

(30) Priorität: 16.08.1996 DE 19632805
(71) Anmelder: Daimler-Benz Aktiengesellschaft, 70546 Stuttgart (DE)
(72) Erfinder: Busch, Werner, 71384 Weinstadt (DE); Nagel, Günther, 73732 Esslingen (DE)

(57) **Zusammenfassung**

Die Erfindung betrifft eine Vorrichtung zur höhenveränderlichen Abstützung einer einzelnen Rad- oder Achsfederung am Aufbau eines Kraftfahrzeugs, die den aufbauseitigen Träger der Federung über ein von einer Druckmittelpumpe angesteuertes Stellglied in Form einer Zylinder-Kolben-Einheit ausfahrbar lagert. Bei dem Stellglied sind die Kolbenstange und/oder der Kolben über einen Flansch starr am Fahrzeugaufbau angeordnet. An seinem Zylinder ist der aufbauseitige Federträger befestigt. Letzterer liegt in der Ruheposition des Stellgliedes direkt auf den Flansch oder dem ihn tragenden Fahrzeugaufbau auf.

## Beschreibung

Die Erfindung betrifft eine Vorrichtung zur höhenveränderlichen Abstützung einer einzelnen Rad- oder Achsfederung am Aufbau eines Kraftfahrzeugs, die den aufbauseitigen Träger der Federung über ein von einer Druckmittelpumpe angesteuertes Stellglied in Form einer Zylinder-Kolben-Einheit ausfahrbar lagert.

Aus der EP 0 281 173 B1 ist eine derartige Vorrichtung bekannt. Die Vorrichtung wird bei einer Federung verwendet, die zwei parallel geschaltete Federelemente aufweist. Die Federelemente sind zwei konzentrisch ineinander angeordnete Schraubenfedern. Die Zylinder-Kolben-Einheit stützt über den hydraulisch ausfahrbaren Federträger nur die innere Schraubenfeder ab. Durch das Spannen dieser Schraubenfeder wird u.a. die Kennlinie der Federung verändert.
Die Zylinder-Kolben-Einheit ist mit ihrem Zylinder am Fahrzeugaufbau befestigt. Ein aus dem Zylinder ausfahrbarer Kolben wirkt auf den Federträger. Zwischen dem Federträger und dem Kolben ist eine Büchse angeordnet, die außen am Zylinder entlanggleitet. Dadurch sind zwischen Kolben und Zylinder sowie zwischen Zylinder und Büchse mehrere Dicht- und Führungssätze notwendig, von denen nur ein Satz druckmittelgeschmiert ist.

Der Erfindung liegt das Problem zugrunde, eine Vorrichtung zu schaffen, die dem überdurchschnittlichen Einfedern einzelner Räder oder Achsbereiche mit einfachen Mitteln entgegenwirkt. Die Vorrichtung soll am Kraftfahrzeug nur wenig eigenen Bauraum beanspruchen und bei geringem Eigengewicht und einer kleinen Bauteileanzahl verschleißarm aufgebaut sein. Auch soll die Vorrichtung an Kraftfahrzeugen bei einfacher Montage zu- oder nachrüstbar sein, ohne daß hierbei die reguläre Federung und/oder Dämpfung geändert werden muß.

Das Problem wird mit den Merkmalen des Hauptanspruchs gelöst. Die Vorrichtung zur höhenveränderlichen Abstützung beinhaltet ein hydraulisches Stellglied, bei dem die Kolbenstange und/oder der Kolben über einen Flansch starr am Fahrzeugaufbau angeordnet und hohl ausgebildet sind. Am Zylinder des Stellgliedes ist der aufbauseitige Federträger befestigt oder angeformt. Der Federträger liegt in der Ruheposition des Stellgliedes direkt auf den Flansch oder dem ihn tragenden Fahrzeugaufbau auf.

Der Zylinder des Stellgliedes ist bauraumsparend im Innenraum der Federung angeordnet. Die Federung kann hierbei eine einzelne Schraubenfeder, einer Kombination aus verschiedenen Schraubenfedern und/oder einer Kombination aus Schrauben und Gummifedern sein. Alle Federelemente stützen sich am aufbauseitigen Federträger ab.

Der Flansch und/oder der aufbauseitige Federträger weisen in Federungsrichtung eine geringe Bauhöhe auf. Folglich ändert sich bei einem nachträglichen oder wahlweisen Einbau die Bodenfreiheit bzw. die Neutrallage der radtragenden und führenden Lenker nur unwesentlich. Gegebenenfalls ist der Flansch so gestaltet, daß er bezüglich seiner Außenmaße kleiner ist als der Federungsinnendurchmesser und innerhalb der Federauflege des Federträgers bleibt, so daß bei der Ruheposition des Stellgliedes die Rückseite des Federträgers sehr nahe an den Fahrzeugaufbau herangeführt werden kann.

Der Federträger ist in den Bereichen, in denen er mit dem Flansch oder dem Fahrzeugaufbau und der Federung in Kontakt kommt, mit einer Beschichtung versehen. Letztere besteht zur Geräuschisolierung und dem Schutz vor Reibkorrosion aus einem elastischen, nichtmetallischen Werkstoff.

Um innerhalb des Stellgliedes mit möglichst wenigen Dichtelementen auszukommen und dauerhaft geschmierte Führungselemente zu haben, ist der Raum zwischen dem Zylinder und der Kolbenstange mit der druckmittelführenden Ausnehmung bzw. dem Hohlraum im Kolben und in der Kolbenstange beispielsweise über mindestens eine Bohrung hydraulisch verbunden.

Das Stellglied wird über die Druckmittelpumpe der hydraulischen Hilfskraftlenkung des Kraftfahrzeugs versorgt. Dadurch wird eine separate Pumpe einschließlich ihrer Beschaltung mit einem Bauraum- und Gewichtsvorteil eingespart. Außerdem wird der Nachrüstaufwand erheblich verringert.

Weitere Einzelheiten der Erfindung ergeben sich aus den nicht oder nur teilweise zitierten Unteransprüchen und der nachfolgenden Beschreibung einer schematisch dargestellten Ausführungsform:

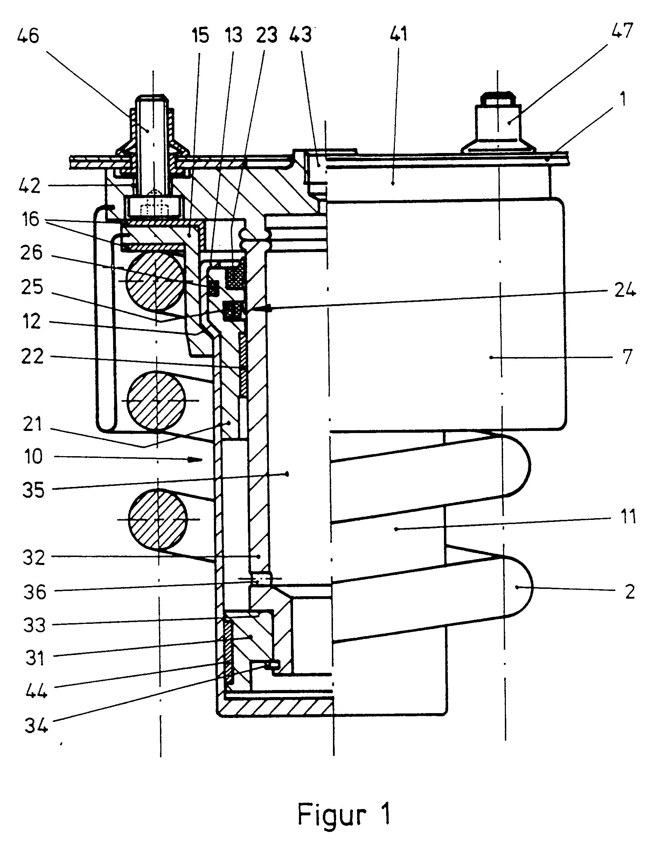

- Figur 1:: Vorrichtung zur höhenveränderlichen Abstützung einer Rad- oder Achsfederung am Aufbau eines Kraftfahrzeugs im Teillängsschnitt.

Der in Figur 1 dargestellte Vorrichtung umfaßt u.a. ein zwischen der Rad- oder Achsfederung (2) und dem Aufbau (1) eines Kraftfahrzeugs eingebautes Stellglied (10). Das Stellglied (10) besteht im wesentlichen aus einem Kolben (31) und einem Zylinder (11).

Der Kolben (31) ist über eine Kolbenstange (32) und einen Flansch (41) am Fahrzeugaufbau (1) befestigt. Der Kolben (31) ist ringförmig ausgebildet und sitzt am unteren Ende einer hohlen Kolbenstange (32), die im Bereich des Kolbensitzes zur Ausbildung einer Schulter (33) verjüngt ist. Der Kolben (31) stützt sich bei hydraulischer Belastung des Stellgliedes (10) an der Schulter (33) ab. In Gegenrichtung wird der Kolben (31) auf der Kolbenstange (32) mit Hilfe eines Sicherungsringes (34) gehalten. Der Sicherungsring (34) sitzt in einer Kolbenstangennut.

Die Kolbenstange (32) ist beispielsweise über eine Reibverschweißung mit dem plattenförmigen, im wesentlichen ebenen Flansch (41) verbunden. Der Flansch (41) hat einen Durchmesser, der beispielsweise geringfügig größer ist als der Außendurchmesser der für die Federung im Ausführungsbeispiel verwendeten Schraubenfeder (2). Er weist an seinem Rand mehrere Bohrungen (42) mit Senkungen nach DIN 74, Form J auf. Die Senkungen ermöglichen für die Befestigung des Flansches (41) am Fahrzeugaufbau (1) die Verwendung von flachköpfigen Zylinderschrauben (46) nach DIN 6912. An der dem Fahrzeugaufbau (1) zugewandten Seite hat der Flansch (41) ebenfalls Senkungen. Sie bilden Aussparungen für die Verwendung sog. Dübelmuttern (47). Letztere sind mit Innengewinde versehene Hülsen, die auf den im Flansch (41) eingelegten Schrauben (46) vorverschraubt sitzen. Zur Montage am Fahrzeugaufbau (1) wird der Flansch (41) zusammen mit den Dübelmuttern (47) dort zur Anlage gebracht, wobei die Dübelmuttern (47) durch am Fahrzeugaufbau (1) vorhandene Bohrungen hindurchragen. Beim Anziehen der Schrauben (46) weiten sich die Dübelmuttern (47) im Bereich des Fahrzeugaufbaus (1), so daß dort eine kraft- und formschlüssige Verbindung entsteht.

Die Art der Schrauben (46) und die Dicke des Flansches (41) ermöglichen eine Einbauhöhe für das Stellglied (10), die im Bereich der Längentoleranz handelsüblicher Fahrzugschraubenfedern liegt. Die Art der Muttern (47) erlaubt eine Montage des Stellgliedes (10) von der Unterseite des Fahrzeugs her. Beide Punkte sind eine wichtige Voraussetzung für den nachträglichen Einbau des Stellgliedes (10) in Kraftfahrzeuge ohne den Austausch der Federung und/oder Dämpfung.

Ferner hat der Flansch (41) eine zentrale, gestufte Gewindebohrung (43), die den Hydraulikanschluß des Stellgliedes (10) darstellt.

Der Zylinder (11) des Stellgliedes (10) ist eine im Arbeitsbereich zylindrische, dünnwandige Büchse mit ebenem Boden. Im Bereich ihres offenen Endes trägt sie eine Kolbenstangenabdichtung (21). Dazu ist der Zylinder (11) in der Abdichtungszone aufgeweitet. Zwischen der Abdichtungszone und dem Arbeitsbereich weist der Zylinder (11) eine kegelstumpfförmige Schulter (12) auf, an der die Kolbenstangenabdichtung (21) in Arbeitshubrichtung anliegt. In Gegenrichtung wird die Kolbenstangenabdichtung (21) durch den umgebördelten Rand (13) des Zylinders (11) fixiert. In der Fuge zwischen dem Zylinder (11) und der Kolbenstangenabdichtung (21) ist ein O-Ring (26) angeordnet.

Die Kolbenstangenabdichtung (21) hat zur Kolbenstange (32) hin drei Nuten oder ringförmige Aussparungen. In der oberen Aussparung ist ein Dichtring (23) für die Schmutzabstreifung eingelegt. In der darunter liegenden Nut sitzt ein das Druckmittel zurückhaltender Dichtring (24), der mit Hilfe eines im Nutgrund liegenden O-Rings (25) verspannt ist. In der unteren Aussparung ist ein ringförmiges Führungselement (22) aus verschleißfestem, druckmittelbeständigen Kunststoff, z.B. PTFE, angeordnet.

Ein vergleichbares Führungselement (44) sitzt in einer in der zylindrischen Außenkontur des Kolbens (31) angebrachten Nut.

Seitlich in der Wandung der Kolbenstange (32) befindet sich eine Querbohrung (36). Sie verbindet den Raum zwischen dem Zylinder (11) und der Kolbenstange (32) erstreckt mit dem Hohlraum (35). Durch die hydraulische Verbindung reduziert sich zwar die wirksame Kolbenfläche um die Stirnfläche der Kolbenstangenabdichtung (21), dafür wird die das Druckmittel zurückhaltende Dichtung in die Kolbenstangenabdichtung (21) verlegt. Dort ist zum einen die Dichtfuge kürzer und zum anderen werden beide Führungselemente (22, 44) durch das sie umgebende Druckmittel geschmiert.

Der Federträger (15) hat die Form eines Rohrflansches. Der rohrförmige Abschnitt des Federträgers (15) liegt an der kegelstumpfförmigen Schulter (12) des Zylinders (11) an. Der plane Bereich des Federträgers (15) bildet zum einen die Auflage für die Schraubenfeder (2) und zum anderen in der Ruheposition des Stellgliedes (10) den Anschlag am Flansch (41). Er ist beidseits mit einem elastischen Kunststoff beschichtet.

Am Flansch (41) und am Federträger (15) ist zum Schutz der Kolbenstange (32) u.a. vor Steinschlag und Korrosion ein Balg (7) befestigt.

Bei dem Zusammenbau des Stellgliedes (10) wird auf die Kolbenstange (32) die Kolbenstangenabdichtung (21) geschoben und der Kolben (31) aufgesteckt und gesichert. Über den Kolben (31) und die an ihm anliegende Kolbenstangenabdichtung (21) wird der Zylinder (11) gestülpt. Anschließend wird der Rand (13) des Zylinders (11) um die Kolbenstangenabdichtung (21) gebördelt und der Federträger (15) auf den Zylinder (11) geschoben bzw. gepreßt.

Für den Betrieb der Vorrichtung im Kraftfahrzeug wird das Stellglied (10) beispielsweise an die Hydraulikpumpe der Servolenkung angeschlossen. Die Benutzung dieser Pumpe ist möglich, da die Vorrichtung im Gegensatz zu einer regulären Niveauregulierung u.a. nur bei überdurchschnittlicher Fahrzeugbeladung, bei Notbremsungen und enger Kurvenfahrt - also relativ selten - aktiviert wird. In allen Fällen wird mittels einer Steuer- und/oder Regelung die Lage des Fahrzeugaufbaus gegenüber der Fahrzeugaufstandsfläche durch entsprechendes Ausfahren der Stellzylinder an den überdurchschnittlich einfedernden Rad- oder Achsaufhängungen der Normallage angenähert.

Durch das Verhindern des üblichen Einfederns bei heftigen Fahrzeugnickbewegungen oder schwerer Beladung stellt die Vorrichtung auch einen Unterfahrschutz dar.

Beispielsweise bei einem Ausgleich einer Beladungseinfederung werden von der Servopumpe die Stellglieder über elektrisch betätigbare Rückschlagventile solange mit Druckmittel versorgt, bis die Normallage des Aufbaus erreicht ist. Der Druck im einzelnen Stellglied bleibt für die gesamte Beladungszeit erhalten. Erst beim nächsten Anheben des Fahzeugaufbaus werden die Rückschlagventile elektrisch geöffnet und die Stellglieder in ihre Ruheposition entlastet.

### Bezugszeichenliste

- 1: Fahrzeugaufbau
- 2: Federung, Schraubenfeder
- 7: Balg
- 10: Stellglied
- 11: Zylinder, dünnwandige Büchse
- 12: Schulter, kegelstumpfförmig
- 13: Bördelrand
- 1: 5 Federträger
- 16: Beschichtung
- 21: Kolbenstangenabdichtung
- 22: Zylinderführung
- 23: Dichtungsring
- 24: Dichtungsring
- 25: O-Ring
- 26: O-Ring
- 31: Kolben
- 32: Kolbenstange
- 33: Schulter
- 34: Sicherungsring
- 35: Ausnehmung, Hohlraum
- 36: Querbohrung
- 41: Flansch
- 42: Bohrungen
- 43: Hydraulikanschluß, Gewindebohrung
- 44: Kolbenführung
- 46: Schrauben, Zylinderschrauben
- 47: Dübelmuttern

## Patentansprüche

1. Vorrichtung zur höhenveränderlichen Abstützung einer einzelnen Rad- oder Achsfederung am Aufbau eines Kraftfahrzeugs, die den aufbauseitigen Träger der Federung über ein von einer Druckmittelpumpe angesteuertes Stellglied in Form einer Zylinder-Kolben-Einheit ausfahrbar lagert, wobei die Kolbenstange (32) und der Kolben (31) des Stellgliedes (10) über einen Flansch (41) starr am Fahrzeugaufbau (1) angeordnet und hohl ausgebildet sind und wobei am Zylinder (11) des Stellgliedes (10) der aufbauseitige, die gesamte Federung (2) abstützende Federträger (15) befestigt oder angeformt ist, dadurch gekennzeichnet,
- daß der Federträger (15) in der Ruheposition des Stellgliedes (10) direkt auf den Flansch (41) oder dem ihn tragenden Fahrzeugaufbau (1) aufliegt,
- daß eine zwischen der Kolbenstange (32) und dem offenen Ende des Zylinders (11) angeordnete Abdichtung (21) einen Innendurchmesser hat, der kleiner ist als der Außendurchmesser des Kolbens (31) und
- daß sich zwischen der kolbenstangenseitigen Kolbenbodenfläche und der Kolbenstangenabdichtung (21) ein Raum erstreckt, der mit dem Hohlraum (35) im Inneren der Kolbenstange (32) hydraulisch in Verbindung steht.

2. Vorrichtung gemäß Anspruch 1, dadurch gekennzeichnet, daß der Flansch (41) und/oder der aufbauseitige Federträger (15) in Federungsrichtung eine geringe Bauhöhe aufweisen.

3. Vorrichtung gemäß Anspruch 1, dadurch gekennzeichnet, daß die Kolbenstange (32) und der Kolben (31) des Stellgliedes (10) eine zentrale Ausnehmung (35) aufweisen.

4. Vorrichtung gemäß Anspruch 1, dadurch gekennzeichnet, daß der Federträger (15) in den Bereichen, in denen er mit dem Flansch (41) und der Federung (2) in Kontakt kommt, mit einer Beschichtung (16) versehen ist, die aus einem elastischen, nichtmetallischen Werkstoff besteht.

5. Vorrichtung gemäß Anspruch 1, dadurch gekennzeichnet, daß der Zylinder (11) des Stellgliedes (10) eine dünnwandige Büchse ist, in der die Kolbenstangenabdichtung (21) eingebördelt ist.

6. Vorrichtung gemäß Anspruch 1, dadurch gekennzeichnet, daß das Stellglied (10) über die Druckmittelpumpe der hydraulischen Hilfskraftlenkung des Kraftfahrzeugs versorgt wird.
